(19)

**Europäisches Patentamt**
**European Patent Office**
**Office européen des brevets**

(11) **EP 1 678 880 B1**

(12) **EUROPEAN PATENT SPECIFICATION**

(45) Date of publication and mention
of the grant of the patent:
**25.02.2009 Bulletin 2009/09**

(51) Int Cl.:
*H04L 12/28* *(2006.01)*     *H04L 29/12* *(2006.01)*

(21) Application number: **04787078.7**

(22) Date of filing: **29.09.2004**

(86) International application number:
**PCT/EP2004/011344**

(87) International publication number:
**WO 2005/048535 (26.05.2005 Gazette 2005/21)**

(54) **COMMUNICATIONS APPARATUS AND METHOD**

KOMMUNIKATIONSVORRICHTUNG UND -VERFAHREN

APPAREIL ET PROCEDE DE COMMUNICATION

(84) Designated Contracting States:
**DE FR GB IT SE**

(30) Priority: **29.10.2003 GB 0325198**

(43) Date of publication of application:
**12.07.2006 Bulletin 2006/28**

(73) Proprietor: **SIEMENS AKTIENGESELLSCHAFT**
**80333 München (DE)**

(72) Inventors:
- **LINDEMANN, Werner**
  **45473 Mülheim (DE)**
- **SCHÖNFELD, Norbert**
  **44145 Dortmund (DE)**

(74) Representative: **Morgan, Marc**
**Siemens Corporate Shared Services**
**Siemens AG**
**P.O. Box 22 16 34**
**80506 Munich (DE)**

(56) References cited:
- **TAO J ET AL: "INTERNET ACCESS VIA BASEBAND AND BROADBAND ISDN GATEWAYS" PROCEEDINGS OF THE ANNUAL INTERNATIONAL PHOENIX CONFERENCE ON COMPUTERS AND COMMUNICATIONS. PHOENIX, APR. 12 - 15, 1994, NEW YORK, IEEE, US, vol. CONF. 13, 12 April 1994 (1994-04-12), pages 485-490, XP000462600**
- **KURI J: "PAUSSCHALREISE INTERNET-ZUGANG FUER MEHRERE RECHNER UEBER DAS LOKALE NETZWERK" CT MAGAZIN FUER COMPUTER TECHNIK, VERLAG HEINZ HEISE GMBH., HANNOVER, DE, no. 18, 28 August 2000 (2000-08-28), pages 140-143, XP000963036 ISSN: 0724-8679**

Printed by Jouve, 75001 PARIS (FR)

## Description

This invention relates to communications apparatus and a method. It particularly relates to apparatus including a router and a method involving a router using a point to point protocol.

Routers are used to interconnect networks and the Internet, for example, is made up of a plurality of networks interconnected by routers. A local area network of interconnected computers in a department may be connected by a router to other local area networks serving other departments in an organisation and also to external networks and the Internet.

A communication is directed by the router by using an Internet Protocol IP address allocated to a particular terminal on the network. It will be appreciated that there are only a limited although large number of possible addresses. In order to cater for the large number of terminals there are global IP addresses for networks and local IP addresses for the terminals. The global addresses are allocated by Internet service providers coordinating with the Internet Assigned Number Authority and the local IP addresses provided from a scheme set up and maintained by the controller of the LAN. In order to route a communication for a terminal on a LAN served by the router, address translation tables are provided to translate from a global IP address to a local address. The advantage of this translation process is that it is relatively straightforward to add new terminals to the LAN or to make other changes requiring an update to the address. The translation process is referred to as Network Address Translation (NAT) and it is usually carried out by a software entity within the router.

By using the NAT technique the global addresses are dynamically allocated to a connection. When the communication is finished the address is freed for use by another connection. A further software entity within the router called a connection controller monitors the traffic and if a connection is not used for a particular length of time the connection is timed-out and broken and the address freed for re-allocation when required. The approach adopted is a simple one in which traffic on the link is used to indicate that the link is in use. An evaluation of whether a link is in use and whether the link can be tore down - especially in case of an ISDN access link (ISDN: Integrated Digital Services Network) to the Internet - can be found in the publication "Internet Access via Baseband and Broadband ISDN Gateways" by J. Tao, Proceedings of the annual international phoenix conference on computers and communications, Apr 12-15, 1994, New York, US, vol. Conf. 13, pages 485-490. In there an inactivity watchdog timer is used to sense a termination of activities on a link.

The traffic on the link however may include packets that are unwanted by a terminal on the LAN and will not be answered when passed to the LAN by the router. For example, a terminal user may have been engaged in browsing the Internet and then discontinued using the browsing application program. Internet frames may still be being delivered which are unwanted. This traffic on the link will result in the connection controller maintaining the connection. Accordingly, this so-called "short-hold" process may lead to an address being held which could be usefully re-allocated.

According to the invention there is provided communications apparatus comprising a router and a connection controller which router, in use, routing data to and from terminals on a local area network and the connection controller controlling connections involving at least one of the terminals, a network address translation translator for translating addresses on incoming data to addresses of terminals on the network; a monitor for monitoring the usage of a network addresses and for sending a message indicative of non-usage to the connection controller; the connection controller being responsive to the receipt of the message to determine whether to release the connection, wherein the network address translator includes a table of network addresses having associated use state data.

By sending a message to the connection controller when an address is unused the connection will be cleared even when a short-hold process would otherwise be implemented and the link apparently being used by packets arriving at the router which are unwanted.

By releasing the connection sooner than it would otherwise be the case connection costs will be reduced. A yet further benefit is that the security of the network is enhanced.

The invention may be used to break more than one PPP-connection. In some arrangements the router may be used to provide connections to more than one PPP interface and more than one LAN. The invention allows the use of connection controllers embodied as software objects each controlling a particular PPP connection and each may be made responsive to a message to release the connection.

The invention also provides a method.

A specific embodiment of the invention will now be described with reference to the drawing in which:

Figure 1 shows a local area network of computer terminals connected by a router operating in accordance with the invention to the Internet; and

Figure 2 shows the router and network of figure 1 in greater detail.

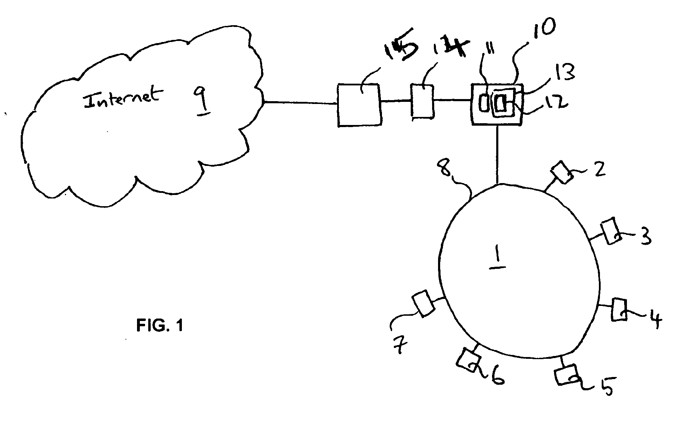

As is shown in figure 1, a local area network LAN 1 is formed of a number of computer terminals 2 to 7 linked by an Ethernet 8. The LAN 1 is connected to the Internet 9 by a router 10. The connections to the terminals 2 to 7 and the Internet are controlled by a software entity within the router 10 called a connection controller 11. The router 10 also includes a network address translation (NAT) translator 12 (sometimes referred to as a NAT box) which hold translation tables in memory (not shown) and an IP router 13.

Whilst in this embodiment the router 10 is connected to one LAN respective PPP-interface it will be appreciated that it may serve more than one LAN or more than one PPP-interface. (Each PPP-interface may have its own individual connection controller)

The router 10 is connected to a modem 14 and thence via an internet service provider 15 to the Internet 9. The link to the modem 14 is a digital subscriber line (DSL) operating in accordance with a point to point protocol (PPP) and a point to point protocol over Ethernet (PPPoE). (The link may in alternative embodiments be an Integrated Digital Services Network (ISDN) line and in general involve the use of other protocols).

The LAN 1 operates in accordance with Ethernet standard IEEE 802.3. The connection control establishes a connection between a terminal on the LAN 1 and the Internet service provider 15 to permit Internet browsing by an application program running on the terminal or to allow emails to be sent and received. It will be understood that each terminal may have more than one application utilising the connection at any given time. Each application will utilise a logical port. For example, terminal 2 may be running an Internet browser and an email application. The browser application will be served via a first logical port and the email application served by a second logical port.

With the connection made, information in the form of datagrams compatible with TCP/IP protocol flow between the Internet 9 and the ports.

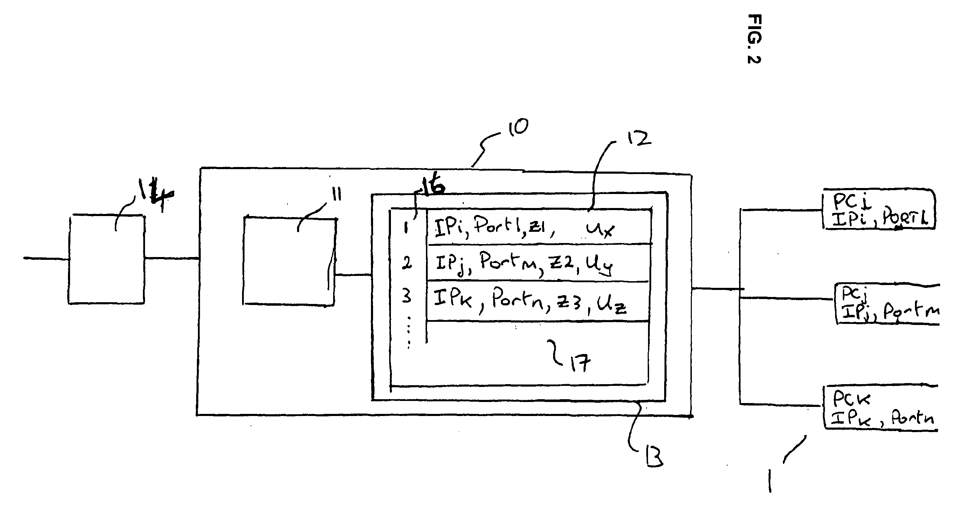

Figure 2 shows the modem 14, router 10 and LAN 1 in more detail. The network address translator 12 allocates to an application an address to be used for the purpose of the connection. As is shown in figure 2, the terminals have an IP address of the form IPi, IPj and IPk. Each application running on the terminal will require a port. In the figure, the terminals are shown with just one port having an identifier Portl, Portm and Portn. The terminal address IPi, IPj or IPk is an internal LAN address set up in accordance with an addressing scheme supported by the LAN operator. Both the IP address and the port addresses are stored in a memory structure within the translator 12 called a Network Address Translation Table (NAT). The table has two fields 16 and 17 which contain the global address information. This is of the form $IP_g \ Port_{g1to3}$ where g denotes global. The local IP addresses and port numbers are written into the rows of field 17(and in some applications in other fields). The global session IP address and the corresponding global port numbers are written in the corresponding division of the address field 16.

When the connection is established, the internet sender communicating with the terminal 2 utilises an IP address IPg included in the arriving packets. This is the address that will be used for the rest of the connection and is therefore called the session IP address. In the examples given this address will be converted into a local IP address and terminate in 1, 2 or 3. Thus for a datagram to arrive from the Internet at the router 10 for forwarding to an application on a terminal it will include the router address for example 100.1.1.5 and a specific port number which is utilized by the router to address a specific local terminal and the corresponding application. The network address translator responds to the global IP/Port address to return the appropriate local IP and port address from field 17 and the IP router 13 sends the data onto the LAN 1 with an appropriate header. Note, that the correct conversion from global to local addresses can be done by the router as the communication is always initiated from the local LAN, so the router stores that initial local addresses and converts these to global addresses, all having the same $IP_g$ but different Port addresses. When the packets return with the global address information, the router can reassign the original local values

The terminals 2 to 7 may be located on one departmental LAN. This grouping may be served by one interface on the router which connects the group to the Internet. The usage of the connection of the group as a whole on this interface will be monitored by the IP router 13. IP packets arriving and leaving the LAN by the interface indicate that the connection is still required.

A further entry in the NAT table 12 is provided to record the time at which the IP router 13 determines that a specific row of tables 16 and 17 has been used for the last time. These are the entries $z_x$ to $z_z$ in the field 17. When the difference between this time and a current time determined by reference to an internal clock exceeds a threshold, the entry (row) is marked as "unused" in the unused flag $u_x$ to $u_z$. If all of the rows in the table are unused then the connection controller 11 will be instructed to clear the connection. (This connection being a DSL or ISDN connection.) The table is checked by the IP router 13 in cycles and updated.. In essence, if we consider the period of checking the NAT table entries as a monitoring period Tc then, n the number of cycles may be derived from the short hold time Ts as follows to mark an entry as unused:

$$n=\mathrm{integer}(Ts/Tc)+1.$$

A NAT entry that has been unused for n cycles is marked as "unused" but not deleted although the connection may already have been broken by the connection controller. It will remain until the NAT lifecycle has expired. The NAT lifecycle may be greater than Ts in order to support applications having large timeouts between several data transmissons

When the IP router 13 determines that all the connections to the ports are unused it sends a message M to the connection controller 11 indicating that the link to LAN 1 is not in use. The connection controller 11 is responsive to this message to break the connection to the ISP 15 The use of the message therefore circumvents the use of the short term hold that may be applied by the connection controller 11 and frees the connection sooner than would otherwise be the case.

In an enhancement of the described embodiment, if a terminal reports via standard TCP protocol features to the IP router 13 that it has been sent packets which are not required by an application running on the terminal, then it will trigger the entry $z1$, $z2$ or $z3$ to be set to unused. This will cater for erroneously sent packets and also packets being sent to a terminal which has closed down say its internet browsing application when the packets are in transit.

Another enhancement, the router will periodically poll the terminals on the LAN. In the event that a terminal is inactive the unused flag for the corresponding row may be set, resulting in the breaking of the connection if all unused flags are set.

In the described alternative the router initiates the release of the connection via the message M to the connection control. In an other alternative the router periodically tells the connection control when the last usage of any of the NAT entries (row) took place so that the connection control can control the timeout for the release of the PPP link itself.

Whilst in the described embodiment the network translator, the IP router and the connection controller as shown within one routing unit they may be furnished as separate components. More than connection controller may be provided and they may be embodied in software as software objects.

**Claims**

1. Communications apparatus comprising a router (10) and at least one connection controller (11) which router (10), in use, for routing data to and from terminals (2, 3, ..., 7) on a local area network (1) and the connection controller (11) for controlling connections involving at least one of the terminals (2, 3, ..., 7) to another network (9), a network address translation translator (12) for translating addresses on incoming data to addresses of terminals (2, 3, ..., 7) on the local area network (1); a monitor for monitoring the usage of a network addresses and for sending a message indicative of non-usage to the connection controller (11); the connection controller (11) adapted to respond to the receipt of the message for determining whether to release the connection to the another network (9), wherein the network address translator (12) includes a table of network addresses having associated use state data.

2. Apparatus as claimed in claim 1, wherein the monitor is an IP router (13).

3. Apparatus as claimed in any one of claims 1 or 2 wherein the connection controller (11) is adapted to control the connection operated in accordance with a point to point protocol(PPP).

4. Apparatus as claimed in claim 3, wherein the connection controller (11) is adapted to control the connection operated in accordance with a point to point protocol(PPP) and at least one additional protocol.

5. Apparatus as claimed in claim 4, wherein the at least one additional protocol is one of a point to point tunnelling protocol (PPTP) or a point to point protocol over Ethernet (PPPoE).

6. Apparatus as claimed in any preceding claim wherein the connection controller (11) is an entity on the router (10).

7. Apparatus as claimed in claim 6, wherein the at least one connection controller (11) is a software object.

8. Apparatus as claimed in any preceding claim wherein a plurality of respective connection controllers (11) is provided each for controlling a respective connection.

9. A method of controlling a connection to a LAN (1) to another network (9) comprising:

   providing a router (10) connected by an interface to ports for applications running on terminals (2, 3, ..., 7) on the LAN (1);
   providing a connection controller (11) for controlling the connection between the router (10) and the another network (9);
   monitoring use of the interface to the ports;
   recording the use of a port in a network address translator table; and
   in the event of the interface being unused for the connections to the ports sending a message to the network controller to break the connection between the router (10) and the another network (9).

**Patentansprüche**

1. Kommunikationsvorrichtung, die Folgendes umfasst: einen Router (10) und mindestens eine Verbindungssteuerungseinrichtung (11), wobei der Router (10) im Gebrauch Daten zu und von Endgeräten (2, 3, ..., 7) in einem lokalen Netzwerk (1) weiterleitet und die Verbindungssteuerungseinrichtung (11) Verbindungen zu einem anderen Netzwerk (9) steuert, an denen mindestens eines der Endgeräte (2, 3, ..., 7) beteiligt ist; eine Netzadressumsetzungs-Umsetzungsvorrichtung (12), die Adressen an eintreffenden Daten in Adressen von Endgeräten (2, 3, ..., 7) in dem lokalen Netzwerk (1) umsetzt; eine Überwachungsvorrichtung, die die Nutzung von Netzadressen überwacht und der Verbindungssteuerungseinrichtung (11) eine Nachricht senden kann, die eine Nichtnutzung anzeigt; wobei die Verbindungssteuerungseinrichtung (11) so ausgelegt ist, dass sie auf den Eingang der Nachricht reagiert, indem sie festlegt, ob sie die Verbindung zu dem anderen Netzwerk (9) freigibt, wobei die Netzadressumsetzungsvorrichtung (12) eine Tabelle aus Netzadressen mit zugehörigen Nutzungszustandsdaten aufweist.

2. Vorrichtung nach Anspruch 1, bei der es sich bei der Überwachungsvorrichtung um einen IP-Router (13) handelt.

3. Vorrichtung nach Anspruch 1 oder 2, bei der die Verbindungssteuerungseinrichtung (11) so ausgelegt ist, dass sie die Verbindung steuert, die gemäß einem PPP (Point to Point Protocol) betrieben wird.

4. Vorrichtung nach Anspruch 3, bei der die Verbindungssteuerungseinrichtung (11) so ausgelegt ist, dass sie die Verbindung steuert, die gemäß einem PPP (Point to Point Protocol) und mindestens einem zusätzlichen Protokoll betrieben wird.

5. Vorrichtung nach Anspruch 4, bei der es sich bei dem mindestens einen zusätzlichen Protokoll um ein PPTP (Point to Point Tunnelling Protocol) oder ein PPPoE (Point to Point Protocol over Ethernet) handelt.

6. Vorrichtung nach einem der vorhergehenden Ansprüche, bei der es sich bei der Verbindungssteuerungseinrichtung (11) um eine Instanz auf dem Router (10) handelt.

7. Vorrichtung nach Anspruch 6, bei der es sich bei der mindestens einen Verbindungssteuerungseinrichtung (11) um ein Software-Objekt handelt.

8. Vorrichtung nach einem der vorhergehenden Ansprüche, bei der mehrere entsprechende Verbindungssteuerungseinrichtungen (11) jeweils für das Steuern einer entsprechenden Verbindung vorgesehen sind.

9. Verfahren zum Steuern einer Verbindung von einem LAN (1) zu einem anderen Netzwerk (9), das Folgendes umfasst:

Bereitstellen eines Routers (10), der über eine Schnittstelle mit Ports für Anwendungen verbunden ist, die auf den Endgeräten (2, 3, ..., 7) im LAN (1) laufen, Bereitstellen einer Verbindungssteuerungseinrichtung (11) zum Steuern der Verbindung zwischen dem Router (10) und dem anderen Netzwerk (9),

Überwachen der Nutzung der Schnittstelle zu den Ports,
Aufzeichnen der Nutzung eines Ports in einer Tabelle in der Netzadressumsetzungsvorrichtung und
falls die Schnittstelle für die Verbindungen zu den Ports nicht genutzt wird: Senden einer Nachricht an die Netzsteuerung, um die Verbindung zwischen dem Router (10) und dem anderen Netzwerk (9) zu unterbrechen.

**Revendications**

1. Appareil de communications comprenant un routeur (10) et au moins un dispositif de commande de connexion (11), lequel routeur (10), à l'utilisation, étant pour acheminer des données vers des et de terminaux (2, 3, ..., 7) sur un réseau local (1) et le dispositif de commande de connexion (11) étant pour commander des connexions impliquant au moins un des terminaux (2, 3, ..., 7) vers un autre réseau (9), un traducteur de traduction d'adresses réseau (12) étant pour traduire des adresses sur des données entrantes en adresses de terminaux (2, 3, ..., 7) sur le réseau local (1) ; un dispositif de surveillance étant pour surveiller l'utilisation d'une adresse réseau et pour envoyer un message indicateur d'une non utilisation au dispositif de commande de connexion (11) ; le dispositif de commande de connexion (11) étant adapté pour répondre à la réception du message pour déterminer s'il convient de libérer la connexion vers l'autre réseau (9), dans lequel le traducteur d'adresses réseau (12) inclut une table d'adresses réseau ayant des données d'état d'utilisation associées.

2. Appareil selon la revendication 1, dans lequel le dispositif de surveillance est un routeur IP (13).

3. Appareil selon l'une quelconque des revendications 1 ou 2, dans lequel le dispositif de commande de connexion (11) est adapté pour commander la connexion opérée conformément à un protocole point à point (PPP).

4. Appareil selon la revendication 3, dans lequel le dispositif de commande de connexion (11) est adapté pour commander la connexion opérée conformément à un protocole point à point (PPP) et au moins un protocole additionnel.

5. Appareil selon la revendication 4, dans lequel l'au moins un protocole additionnel est l'un d'un protocole de tunnellisation point à point (PPTP) ou d'un protocole point à point sur Ethernet (PPPoE).

6. Appareil selon une quelconque revendication précédente, dans lequel le dispositif de commande de connexion (11) est une entité sur le routeur (10).

7. Appareil selon la revendication 6, dans lequel l'au moins un dispositif de commande de connexion (11) est un objet logiciel.

8. Appareil selon une quelconque revendication précédente, dans lequel une pluralité de dispositifs de commande de connexion (11) respectifs sont prévus, chacun pour commander une connexion respective.

9. Procédé de commande d'une connexion vers un LAN (1) vers un autre réseau (9) comprenant :

la prévision d'un routeur (10) connecté par une interface à des ports pour des applications tournant sur des terminaux (2, 3, ..., 7) sur le LAN (1) ;
la prévision d'un dispositif de commande de connexion (11) pour commander la connexion entre le routeur (10) et l'autre réseau (9) ;
la surveillance de l'utilisation de l'interface avec les ports ;
l'enregistrement de l'utilisation d'un port dans une table de traducteur d'adresses réseau ; et dans le cas où l'interface n'est pas utilisée pour les connexions aux ports, l'envoi d'un message au contrôleur réseau pour interrompre la connexion entre le routeur (10) et l'autre réseau (9).

**FIG. 1**

**FIG. 2**

**REFERENCES CITED IN THE DESCRIPTION**

**Non-patent literature cited in the description**

- **J. TAO.** Internet Access via Baseband and Broadband ISDN Gateways. *Proceedings of the annual international phoenix conference on computers and communications,* 12 April 1994, vol. Conf. 13, 485-490